Europäisches Patentamt

European Patent Office

Office européen des brevets

(11) Veröffentlichungsnummer: **0 472 010 A1**

## (12) EUROPÄISCHE PATENTANMELDUNG

(21) Anmeldenummer: **91112679.5**

(22) Anmeldetag: **27.07.91**

(51) Int. Cl.⁵: **B60H 1/20**

(30) Priorität: **23.08.90 DE 4026595**

(43) Veröffentlichungstag der Anmeldung:
**26.02.92 Patentblatt 92/09**

(84) Benannte Vertragsstaaten:
**DE ES FR GB IT SE**

(71) Anmelder: **MAN Nutzfahrzeuge
Aktiengesellschaft
Dachauer Strasse 667 Postfach 50 06 20
W-8000 München 50(DE)**

(72) Erfinder: **Meier, Richard
Goethering 33 c
W-8504 Stein(DE)**
Erfinder: **Knorr, Herbert, Dipl.-Ing.
Lindenweg 11
W-8540 Rednitzhembach(DE)**

(54) **Fahrgastraumheizung für Fahrzeuge.**

㊻ Die Erfindung bezieht sich auf eine Fahrgastraumheizung für Fahrzeuge. Zur Erhöhung der Heizleistung ohne Mehrverbrauch an Brennstoff wird erfindungsgemäß dem Abgaswärmetauscher (5) ein Katalysator (17) vorgeschaltet, der besonders im Leerlauf und im Teillastbereich durch Nachverbrennung der unverbrannten Kohlenwasserstoffe zusätzliche thermische Energie liefert. Zur Regulierung des an den Warmwasserkreislauf (1) übertragenen Wärmestromes wird eine Abgasweiche (11) vorgesehen, welche durch Thermoschalter derart angesteuert werden kann, daß sie bei Bedarf an Wärme das Abgas über den Abgaswärmetauscher (5) leitet, bzw. bei zu hohem Angebot an Wärme aus dem Kühlwasser und dem Abgas das Abgas unmittelbar über den Schalldämpfer (18) ins Freie leitet.

EP 0 472 010 A1

Die Erfindung bezieht sich auf eine Fahrgastraumheizung gemäß dem Oberbegriff des Patentanspruches 1.

Aus DE-OS 35 09 016 ist eine Fahrgastraumheizung bekannt, bei der sowohl die Wärme des Kühlkreislaufes, als auch die Abwärme der Auspuffgase für die Heizung genutzt wird. Um die Heizung durch die Abgase zu bzw. abschalten zu können ist zwischen einem Auspuffkrümmer einer Brennkraftmaschine und einem Abgaswärmetauscher eine Abgasweiche vorgesehen, welche durch Klappen gesteuert werden kann. Die Abgase können durch eine erste Klappe unmittelbar über den Abgaswärmetauscher geführt werden, wo sie ihre Wärme auf den Warmwasserkreislauf der Heizung übertragen. Eine zweite Klappe versperrt in dieser Phase den Weg zu einem Schalldämpfer. Bei einem Überangebot an Wärme aus dem Abgaswärmetauscher werden die Klappen der Abgasweiche so umgeschaltet, daß der Weg der Abgase über den Wärmetauscher versperrt ist und die Abgase unmittelbar über den Schalldämpfer geführt werden. Zur Synchronisation der Bewegungen der Klappen der Abgasweiche ist ein Hebelsystem vorgesehen, welches von einem Druckluftzylinder betätigt wird. Die Steuerung des Druckluftzylinders übernehmen Thermoschalter, die am Wasseraustritt des Abgaswärmetauschers angeordnet sind. Der Abgaswärmetauscher besteht aus abgasdurchströmten Rohren, welche vom Wasser umspült sind. Das Abgas geht nach dem Durchgang durch den Wärmetauscher unmittelbar in die Umgebung. Ein derartiges Heizungssystem ist nicht in der Lage unverbrannte Bestandteile der Abgase für die Heizung zu nutzen und die Energie der Brennstoffe optimal zu verwerten.

Ausgehend von einer Fahrgastraumheizung gemäß dem Oberbegriff des Patentanspruches 1 liegt der Erfindung die Aufgabe zugrunde, den Brennstoff für die Beheizung von Fahrgasträumen von Fahrzeugen welche überwiegend im Haltestellenbetrieb tätig sind optimal zu nutzen.

Gelöst wird diese Aufgabe durch die kennzeichnenden Merkmale des Patentanspruches 1.

Durch die Vorschaltung eines Katalysators werden die im unteren Teillastbereich der Brennkraftmaschine anfallenden unverbrannten CH-Bestandteile nachverbrannt und deren Verbrennungswärme im anschließenden Abgaswärmetauscher dem Heizungskreislauf zugeführt. Da besonders im Leerlauf, im Teillastbereich und in der Warmlaufphase von Brennkraftmaschinen größere Mengen an unverbrannten Bestandteilen im Abgas anfallen wird der Brennstoff optimal genutzt, bei Fahrzeugen im Haltestellenbetrieb kann weitgehend auf die sonst übliche Zusatzheizung verzichtet werden.

Eine vorteilhafte Weiterbildung der Steuerung nach Anspruch 1 kann Anspruch 2 entnommen werden. Durch die Anordnung der Thermoschalter und eines Thermostaten wird im diskontinuierlichen Haltestellenbetrieb eine schnelle Erwärmung der Brennkraftmaschine beim Hochfahren erreicht, verbunden mit einer Reduzierung des Brennstoffverbrauches und einer Verschleißminderung von Bauteilen. Durch die Nachverbrennung der Abgase im Katalysator wird die entstehende Energie optimal für Heizzwecke genutzt.

Ein Ausführungsbeispiel einer Fahrgastraumheizung ist in einer Zeichnung dargestellt.

Die Fahrgastraumheizung besteht aus einem Warmwasserkreislauf 1, in dem sich die Heizgeräte 2 befinden. Um das Wasser im Warmwasserkreislauf 1 zu erwärmen sind eine Brennkraftmaschine 3, ein Wandler-Getriebe 4, ein Abgaswärmetauscher 5 und eine Brenner-Heizung 6 in Reihe geschaltet. Dem Heizkreislauf 1 ist ein Kühlwasserkreislauf 7 parallel geschaltet, in den ein Wasserkühler 8 eingebunden ist. Der Kühlwasserkreislauf 7 kann von einem Thermostat 9 so gesteuert werden, daß das Kühlwasser entweder über den Wasserkühler 8 geführt wird, oder aber über eine Leitung 10 strömt, so daß der Kühlwasserkreislauf 7 quasi kurzgeschlossen ist.

Der Abgaswärmetauscher 5, der in den Warmwasserkreislauf 1 eingeschaltet ist kann wahlweise vom Abgas durchströmt werden, oder aus dem Abgasstrom genommen werden. Zu diesem Zweck ist eine Abgasweiche 11 vorgesehen, welche durch erste und zweite Klappen 12 und 13 gesteuert wird. Die Betätigung der Klappen 12 und 13 erfolgt über ein Gestänge 14, welches mit einem Druckluftzylinder 15 zusammenwirkt. Die Abgasweiche 11 ist einem Auspuffkrümmer 16 und einem Katalysator 17 nachgeschaltet. Durch die Abgasweiche kann das Abgas entweder über den Abgaswärmetauscher 5 oder direkt über einen Schalldämpfer 18 geführt werden.

In der gezeichneten Stellung wird das Abgas über die geöffnete erste Klappe 12 dem Abgaswärmetauscher 5 zugeführt. Nach dem Verlassen des Abgaswärmetauschers 5 gelangt das abgekühlte Abgas über eine Abgasleitung 19 und den Schalldämpfer 18 in die Umgebung.

Wird der Druckluftzylinder 15 umgeschaltet, dann schließt die erste Klappe 12, während zeitgleich die zweite Klappe 13 öffnet. Das Abgas gelangt dann unmittelbar über den Schalldämpfer 18 in die Umgebung.

Wird die Brennkraftmaschine 3 gestartet, so soll sich zunächst das Kühlwasser so schnell als möglich erwärmen. Zu diesem Zweck ist, wie schon vorab erwähnt wurde, der Thermostat 9 geschlossen, so daß der Wasserkühler 8 umgangen wird. Das Kühlwasser durchströmt also zunächst die Brennkraftmaschine 3 selbst, anschließend das Wandler-Getriebe 4 und darauffolgend den Abgaswärmetauscher 5, der in der gezeichneten Stellung der Klappen 12 und 13 nach dem Anlassen der Brennkraftmaschine 3 sofort Wärme für den Warmwasserkreislauf 1 liefert. Dem Abgaswärmetauscher 5 ist das Brenner-Heizgerät 6 nachgeschaltet, welches zum schnelleren Aufheizen des Warmwasserkreislaufes 1 zugeschaltet werden kann.

Wenn das Wasser eine Temperatur von 70°C erreicht hat schaltet ein zweiter Thermoschalter 20 das Brenner-Heizgerät 6 ab. Bei einerTemperatur von 78°C schaltet ein dritter Thermoschalter 21 den Druckluftzylinder 15 um, so daß die erste Klappe 12 schließt und synchron dazu die zweite Klappe 13 öffnet, wodurch das Abgas über ein Abgasrohr 24 unmittelbar dem Schalldämpfer 18 zugeführt wird, so daß der Abgaswärmetauscher 5 ausgeschaltet ist. Beim Abfall der Wassertemperatur auf 73°C wird durch den dritten Thermoschalter 21 und ein Umschalten der Klappen 12 und 13 der Abgaswärmetauscher 5 wieder aktiviert.

Zur Absicherung gegen Überhitzung ist ein erster Thermoschalter 22 vorgesehen, der beim Erreichen einer Wassertemperatur von 90°C an einem Wasseraustritt 23 des Abgaswärmetauschers 5 zwangsläufig die Abgasweiche 11 so umstellt, daß die Abgase bis zum Abstellen der Brennkraftmaschine nur über den Schalldämpfer 18 geführt werden.

Wesentliches Merkmal der Erfindung ist die Einschaltung des Katalysators 17, der zwischen dem Auspuffkrümmer 16 und der Abgasweiche 11 angeordnet ist. Durch den Katalysator 17 werden unverbrannte Bestandteile wie CH und CO des Abgases aufoxidiert, wodurch sich chemisch gesehen unschädliche Endverbrennungsprodukte bilden und als Nebeneffekt durch die Nachoxidation zusätzliche Energie in Form von Wärme entsteht, welche über das Abgas und den Abgaswärmetauscher 5 auf den Warmwasserkreislauf 1 übertragen wird. Dieser Effekt macht sich besonders nachhaltig bei Fahrzeugen bemerkbar, die im Haltestellendienst eingesetzt werden. Bei diesen Fahrzyklen durchläuft die Brennkraftmaschine 3 Phasen mit Teillast oder Leerlauf, in denen der Kühlwasserkreislauf 7 nicht ausreicht, um den Wärmebedarf der Heizung zu decken. Gerade im Leerlauf, im Teillastbereich und in der Warmlaufphase haben aber die Abgase von Brennkraftmaschinen höhere Bestandteile an unverbrannten Kohlenwasserstoffen die im Katalysator 17 zum Endverbrennungsprodukt wie $CO_2$ und $H_2O$ aufoxidiert werden und das Abgas mit zusätzlicher Wärme anreichern. Der erfindungsgemäß der Abgasweiche vorgelagerte Katalysator 17 verbessert einerseits die Abgaswerte und spart andererseits Brennstoff für die Heizung ein. Die Brenner-Heizung 6 wird nur noch bei extremen Witterungslagen erforderlich.

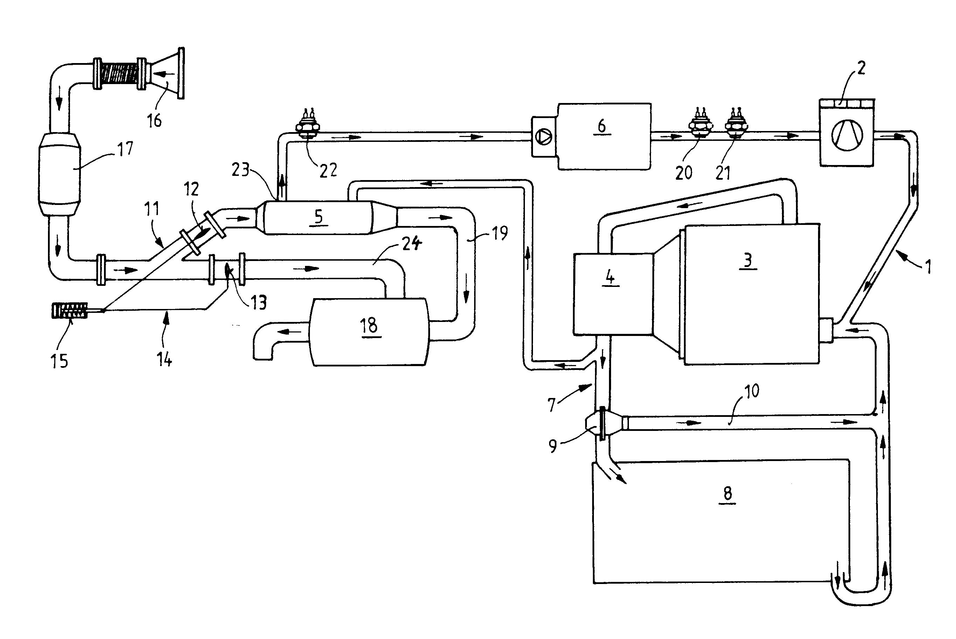

## Patentansprüche

1. Fahrgastraumheizung für Fahrzeuge, bestehend aus einem der Wärmeübertragung dienenden Warmwasserkreislauf, in den in Reihe geschaltet der Motorkühlkreislauf, ein Wandler-Getriebe, ein Abgaswärmetauscher und Heizgeräte für den Fahrgastraum eingebunden sind, wobei dem Abgaswärmetauscher eine Abgasweiche vorgeschaltet ist, welche es gestattet, die Abgase wahlweise über den Abgaswärmetauscher oder über ein Abgasrohr unmittelbar einem Schalldämpfer zuzuführen, wobei die Abgasweiche durch Klappen gesteuert wird, welche über ein Hebelsystem von einem Druckluftzylinder betätigbar und der Druckluftzylinder durch Thermoschalter im Warmwasserkreislauf steuerbar ist, dadurch gekennzeichnet, daß dem Abgaswärmetauscher (5) ein Katalysator (17) vorgeschaltet ist, welcher zwischen einem Auspuffkrümmer (16) der Brennkraftmaschine (3) und der Abgasweiche (11) angeordnet ist, daß der Abgaswärmetauscher (5) stromab ebenso wie das Abgasrohr (24) in den Schalldämpfer (18) mündet und daß im Warmwasserkreislauf (1) dem Abgaswärmetauscher (5) ein Brenner-Heizgerät nachgeschaltet ist.

2. Fahrgastraumheizung nach Anspruch 1, dadurch gekennzeichnet, daß zur Steuerung der Abgasweiche (11) im Wasserkreislauf zwei funktionell auf den Druckluftzylinder 15 einwirkende erste und dritte Thermoschalter (22 und 21) vorgesehen sind, wobei der dritte Thermoschalter 21 bei ca. 78°C die Abgasweiche 11 derart umstellt, daß der Abgaswärmetauscher 5 abgeschaltet und das Abgas über das Abgasrohr 24 unmittelbar dem Schalldämpfer 18 zugeführt wird, während bei Absinken der Wassertemperatur auf 73°C der dritte Thermoschalter 21 die Abgasweiche 11 erneut derart umschaltet, daß das Abgas wieder über den Abgaswärmetauscher 5 geführt wird, daß zur Steuerung des Brenner-Heizgerätes 6 an dessen Austritt ein zweiter Thermoschalter 20 vorgesehen ist, welcher beim Erreichen einer Temperatur von 70°C das Brenner-Heizgerät 6 abschaltet, und daß am Wasseraustritt 23 des Abgaswärmetauschers 5 ein erster Thermoschalter 22 angeordnet ist, welcher zum Schutz vor Überhitzung bei 90°C die Abgasweiche 11 derart umstellt, daß auf Dauer bis zum Abstellen der Brennkraftmaschine 3 kein Abgas über den Abgaswärmetauscher 5 geleitet werden kann.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 509 016   (TOVARNA AUTOMOBILOV)<br>* Seite 4, Zeile 32 - Seite 7, Zeile 12; Abbildungen 1-3 * *<br>– – – | 1 | B 60 H 1/20 |
| Y | PATENT ABSTRACTS OF JAPAN vol. 10, no. 25 (M-450)(2082) 31. Januar 1986<br>& JP-A-60 183 221 ( SUMITOMO ) 18. September 1985<br>* Zusammenfassung * *<br>– – – | 1 | |
| A | PATENT ABSTRACTS OF JAPAN vol. 8, no. 108 (M-297)(1545) 19. Mai 1984<br>& JP-A-59 018 008 ( TOYO KOGYO ) 30. Januar 1984<br>* Zusammenfassung * *<br>– – – | 2 | |
| A | US-A-4 146 176   (BEAUVAIS ET AL.)<br>* Zusammenfassung; Abbildung 1 * *<br>– – – | 1 | |
| A | DE-A-3 025 283   (WEBASTO)<br>* Seite 6, Zeile 12 - Zeile 26; Abbildung 2 * *<br>– – – – – | 1 | |

**RECHERCHIERTE SACHGEBIETE (Int. Cl.5)**

B 60 H

Der vorliegende Recherchenbericht wurde für alle Patentansprüche erstellt

| Recherchenort | Abschlußdatum der Recherche | Prüfer |
|---|---|---|
| Den Haag | 03 Dezember 91 | DENICOLAI G. |